# FASCICULE DE BREVET EUROPEEN

(11) **EP 3 090 924 B1**
(45) Date de publication et mention de la délivrance du brevet: **23.01.2019**
(21) Numéro de dépôt: 16168030.1
(22) Date de dépôt: 03.05.2016
(51) Int. Cl.: B62D 25/08

(54) **TRAVERSE DE BAIE D'UN VEHICULE AUTOMOBILE ET VEHICULE AUTOMOBILE ASSOCIE**
QUERTRÄGER EINER FENSTERÖFFNUNG EINES KRAFTFAHRZEUGS, UND DAZUGEHÖRIGES KRAFTFAHRZEUG
WINDSHIELD BAY CROSS MEMBER FOR A MOTOR VEHICLE AND ASSOCIATED MOTOR VEHICLE

(30) Priorité: 07.05.2015 FR 1554132
(43) Date de publication de la demande: 09.11.2016
(73) Titulaire: Renault S.A.S., 92100 Boulogne-Billancourt (FR)
(72) Inventeur: FOUBERT, VINCENT, 78200 BOISSY MAUVOISIN (FR); RAFFY, PHILIPPE, 91430 IGNY (FR)

(56) Documents cités:
- WO-A1-2012/042147
- DE-A1-102010 051 770
- JP-A- H1 120 738
- JP-A- H11 198 856

## Description

### DOMAINE TECHNIQUE AUQUEL SE RAPPORTE L'INVENTION

La présente invention concerne de manière générale le domaine des traverses de baie de véhicule automobile.

Elle concerne plus particulièrement une traverse de baie d'un véhicule automobile adaptée à être positionnée entre un bord inférieur d'un pare-brise dudit véhicule automobile et un tablier de ce véhicule automobile, présentant une forme allongée selon un axe principal, et comprenant un élément de traverse supérieur et un élément de traverse inférieur assemblés pour former entre eux un premier corps creux.

### ARRIERE-PLAN TECHNOLOGIQUE

D'une manière générale, à l'avant des véhicules automobiles se trouve une pièce appelée traverse de baie, disposée entre le pare-brise, le capot qui protège le compartiment moteur de l'environnement extérieur, et le tablier qui sépare le compartiment moteur et l'habitacle du véhicule automobile.

La traverse de baie s'étend dans une direction transversale du véhicule automobile et prend appui sur les coupelles d'amortisseur, situées de part d'autre dudit véhicule automobile, au niveau des roues avant droite et gauche.

Elle a trois fonctions principales, à savoir supporter le pare-brise, alimenter en air un bloc ventilation du véhicule automobile, et permettre la décantation entre l'air et l'eau pénétrant en son sein.

En outre, du fait de sa position dans le véhicule automobile, la traverse de baie doit respecter certaines réglementations en vigueur visant à protéger les piétons lors d'un choc frontal avec le véhicule automobile.

Pour remplir toutes ses fonctions, la traverse de baie répond à un cahier des charges particulièrement complexe.

Ainsi, par exemple, elle doit présenter une certaine raideur dans la direction transversale du véhicule automobile de manière à pouvoir supporter le pare-brise, et une certaine souplesse dans une direction longitudinale du véhicule automobile de manière à pouvoir se déformer sous l'effet d'un choc frontal avec un piéton.

A ce jour, on connaît des traverses de baie comprenant un grand nombre de pièces distinctes, par exemple cinq pièces distinctes, agencées les unes par rapport aux autres de manière à former un seul corps creux.

Ce corps creux constitue un conduit unique de circulation d'air. L'agencement de ces différentes pièces délimite avec les coupelles d'amortisseur du véhicule automobile des ouvertures avant formant des entrées d'air dans ce conduit. Celles-ci sont donc situées aux extrémités principales de la traverse de baie, au niveau des coupelles d'amortisseur.

Une ouverture arrière est également prévue pour la sortie de l'air circulant dans la traverse de baie vers l'habitacle du véhicule. Cette ouverture arrière se situe dans une zone centrale de la traverse, à distance de ses extrémités principales.

Ainsi, dans ces traverses de baie connues, l'air circule directement depuis les extrémités principales de la traverse jusqu'à la région centrale de la traverse et débouche dans l'habitacle. Cette circulation d'air peut être bruyante dans la mesure où l'air n'est pas dévié entre son entrée et sa sortie de la traverse de baie.

Par ailleurs, les traverses de baie connues comportent généralement une pièce constituant un renfort mécanique transversal de la traverse de baie de sorte que celle-ci soit suffisamment raide/rigide pour supporter le pare-brise. Cette pièce de renfort s'étend sur toute la longueur de la traverse de baie. Elle est située dans une partie inférieure de la traverse de baie, de manière à ce que la partie supérieure de la traverse de baie conserve la souplesse longitudinale imposée par les réglementations en vigueur.

De telles traverses de baie sont particulièrement complexes à fabriquer.

En outre, elles sont difficiles à adapter à des pare-brise qui s'avancent plus que d'ordinaire vers l'avant du véhicule, à moins d'alourdir nettement ce véhicule, ce qui n'est pas souhaitable.
Le document JP H11 198856 A décrit une traverse de baie d'un véhicule automobile selon le préambule de la revendication 1.

### OBJET DE L'INVENTION

Afin de remédier aux inconvénients précités de l'état de la technique, la présente invention propose une nouvelle traverse de baie dont la fabrication est simplifiée tout en préservant les caractéristiques mécaniques de raideur transversale et de souplesse longitudinale de la traverse de baie, et qui permet en outre un allègement du véhicule automobile.

Plus particulièrement, on propose selon l'invention une traverse de baie telle que décrite en introduction, dans laquelle lesdits éléments de traverse supérieur et inférieur sont également assemblés entre eux le long d'une cloison d'assemblage s'étendant selon l'axe principal, dans une région centrale de ladite traverse de baie pour former un deuxième corps creux séparé au moins partiellement dudit premier corps creux par ladite cloison d'assemblage.

Ainsi, la traverse de baie selon l'invention présente une raideur renforcée, selon la direction transversale au véhicule automobile, par la présence de ladite cloison d'assemblage.

En outre, la présence de deux corps creux préserve la souplesse de la traverse de baie selon la direction longitudinale du véhicule.

D'autres caractéristiques non limitatives et avantageuses de la traverse de baie conforme à l'invention sont les suivantes :
- ladite cloison d'assemblage est formée par l'assemblage d'une partie de paroi dudit élément de traverse supérieur et d'une partie de paroi dudit élément de traverse inférieur ;
- lesdits premier et deuxième corps creux sont en communication l'un avec l'autre, au niveau des extrémités principales de la traverse de baie ;
- ladite cloison d'assemblage étant formée par l'assemblage d'une première et d'une deuxième parties de paroi appartenant aux éléments de traverse supérieur et inférieur, la première partie de paroi présentant un bord courbe et la deuxième partie de paroi présentant un bord rectiligne, ces première et deuxième parties de parois sont plaquées l'une contre l'autre dans une zone centrale de telle sorte que le bord courbe de la première partie de paroi s'écarte du bord rectiligne de la deuxième partie de paroi de part et d'autre de cette région centrale.

En outre, selon l'invention il est prévu au moins une ouverture avant destinée à former une entrée d'air extérieur dans ladite traverse de baie, qui débouche dans ledit premier corps creux.

Le premier corps creux forme ainsi un premier conduit de circulation d'air acheminant l'air entrant pas ladite ouverture avant vers le deuxième corps creux.

Avantageusement, chaque ouverture avant est située à distance des extrémités principales de ladite traverse de baie.

La cloison d'assemblage qui s'étend selon l'axe principal, dans une région centrale de ladite traverse de baie forme donc un obstacle au passage de l'air entrant dans le premier corps creux. Cette cloison guide l'air vers les extrémités principales de la traverse de baie. Cela diminue avantageusement les bruits liés à la circulation d'air dans ladite traverse de baie.

Avantageusement encore, il est prévu au moins une ouverture arrière destinée à former une sortie d'air depuis ledit deuxième corps creux vers un habitacle du véhicule automobile.

Par ailleurs, avantageusement, dans ladite traverse de baie, les éléments de traverse supérieur et inférieur sont chacun formés d'une seule pièce.

Ainsi, le nombre de pièces formant la traverse de baie est réduit, ce qui tend à alléger ledit véhicule automobile. Les coûts de production sont également limités par la réduction du nombre de pièces à fabriquer et à assembler.

Enfin, avantageusement, un élément de traverse supplémentaire est disposé sous les éléments de traverse supérieur et inférieur de manière à fermer le deuxième corps creux.

L'invention propose également un véhicule automobile qui s'étend d'avant en arrière selon une direction longitudinale, qui comprend un pare-brise et un tablier, et qui comprend en outre une traverse de baie telle que décrite précédemment, positionnée selon une direction transversale dudit véhicule automobile, entre ledit tablier et un bord inférieur dudit pare-brise.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective de trois-quarts arrière représentant une traverse de baie selon l'invention montée dans un véhicule automobile ;
- la figure 2 est une vue schématique en perspective de trois-quarts avant représentant la traverse de baie de la figure 1 dans le véhicule automobile ;
- la figure 3 est une vue schématique en perspective arrière de la traverse de baie de la figure 1 ;
- la figure 4 est une vue schématique en perspective avant de la traverse de baie de la figure 1 ;
- la figure 5 est une vue en perspective arrière éclatée de la traverse de baie de la figure 3 ;
- la figure 6 est une vue schématique en coupe selon le plan I-I de la traverse de baie de la figure 3 ;
- la figure 7 est une vue schématique en coupe selon le plan II-II de la traverse de baie de la figure 3 ;
- la figure 8 est une vue schématique en coupe selon le plan III-III de la traverse de baie de la figure 3 ; et,
- la figure 9 est une vue schématique en coupe selon le plan IV-IV de la traverse de baie de la figure 3.

Dans la suite de la description, les termes « avant » et « arrière » désigneront les éléments de la traverse de baie destinés à être tournés respectivement vers le compartiment moteur du véhicule automobile et vers l'habitacle du véhicule automobile, lorsque la traverse de baie est en position d'utilisation dans le véhicule automobile.

Similairement, les termes « inférieur » et « supérieur » seront utilisés en référence avec la position relative des éléments de la traverse de baie en position d'utilisation dans le véhicule automobile.

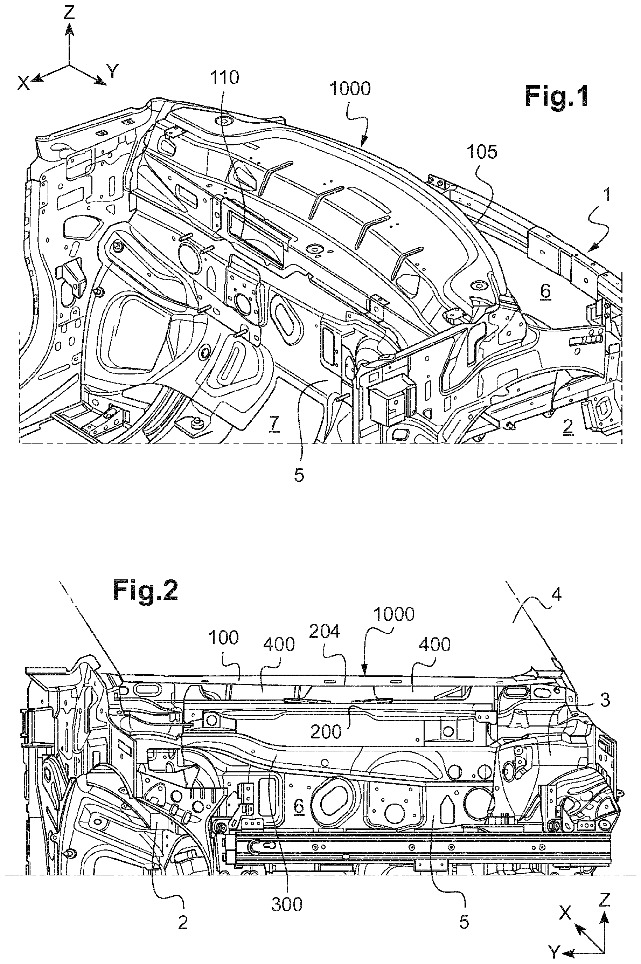

Sur les figures 1 et 2, on a représenté une traverse de baie 1000 d'un véhicule automobile 1 en position dans ledit véhicule automobile 1.

Un repère orthogonal direct (X ; Y ; Z) est ici associé au véhicule automobile 1. Afin de faciliter la visualisation dans l'espace de la traverse de baie selon l'invention, ce repère a été reporté sur les figures 1 et 2.

Dans ce repère, l'axe X s'étend selon une direction longitudinale, d'avant en arrière, du véhicule automobile 1. L'axe Y s'étend selon une direction transversale au véhicule automobile 1, perpendiculairement à l'axe Y. L'axe Z s'étend verticalement vers le haut.

Lorsqu'elle est positionnée dans le véhicule automobile 1, la traverse de baie 1000 s'étend globalement selon la direction transversale de l'axe Y du véhicule automobile 1, c'est-à-dire dans la direction reliant deux emplacements 2 destinés à accueillir deux roues avant dudit véhicule automobile 1 (figures 1 et 2).

Plus précisément, la traverse de baie 1000 repose sur des coupelles d'amortisseur 3 (figure 2) situées à proximité desdits emplacements 2 pour roues avant.

La traverse de baie 1000 s'étend également en partie selon ladite direction longitudinale de l'axe X et selon la direction verticale de l'axe Z dudit véhicule automobile 1, en formant globalement deux marches d'escalier arrondies et montantes en direction de l'avant du véhicule.

Dans la direction verticale de l'axe Z du véhicule, la traverse de baie 1000 est placée entre un pare-brise 4 et un tablier 5 du véhicule automobile 1.

Plus précisément, la traverse de baie 1000 est destinée à accueillir et à supporter ledit pare-brise 4. Elle comporte à cet effet des moyens d'accueil du pare-brise 4.

Ces moyens d'accueil comprennent ici une bordure 105 disposée à l'avant de la traverse de baie 1000 et dont la forme est adaptée à accueillir un bord inférieur dudit pare-brise 4.

Avantageusement, la traverse de baie 1000 est ici adaptée à accueillir un pare-brise de type galbé ou parabolique, qui s'avance loin vers l'avant du véhicule automobile. Pour cela, la bordure 105 est courbée et convexe.

Dans la direction longitudinale de l'axe X du véhicule, la traverse de baie 1000 est placée entre un compartiment moteur 6 et un habitacle 7 dudit véhicule automobile 1.

Plus précisément, la traverse de baie 1000 est adaptée à former un conduit de circulation d'air destiné à alimenter un système de ventilation de l'habitacle 7 du véhicule automobile 1.

A cet effet, la traverse de baie 1000 comprend, à l'avant, au moins une ouverture, appelée ouverture avant 400, destinée à former une entrée d'air dans la traverse de baie 1000.

Ici, elle comprend précisément deux ouvertures avant 400, débouchant à l'extérieur de l'habitacle 7 du véhicule, dans le compartiment moteur 6. Ces ouvertures 400 sont protégées du bruit et des odeurs émanant du moteur par une « boîte à eau », qui est un élément de séparation entre l'air et l'eau, situé dans la région inférieure du pare-brise 4 et orienté essentiellement suivant la direction transversale de l'axe Y du véhicule automobile 1.

Elle comprend également, à l'arrière, une autre ouverture, appelée ouverture arrière 110, destinée à former une sortie d'air de la traverse de baie 1000, débouchant dans l'habitacle 7 du véhicule automobile 1.

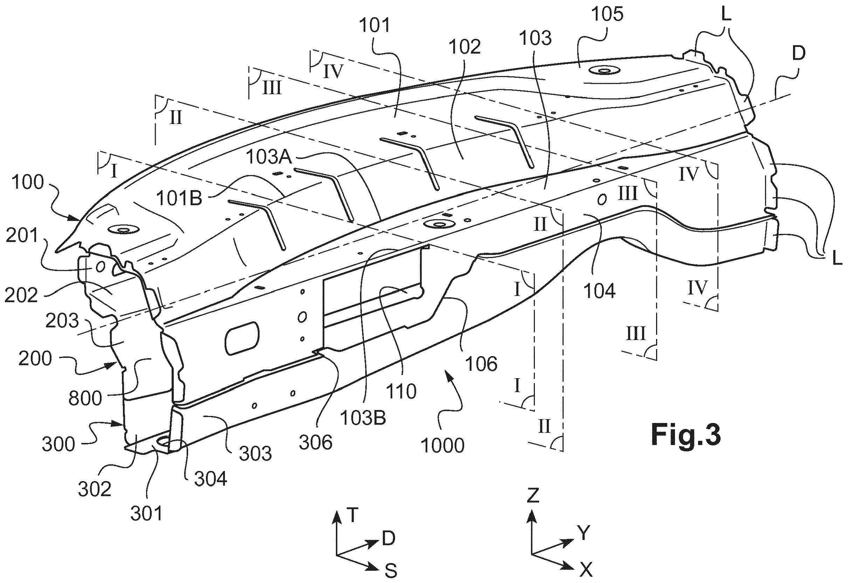

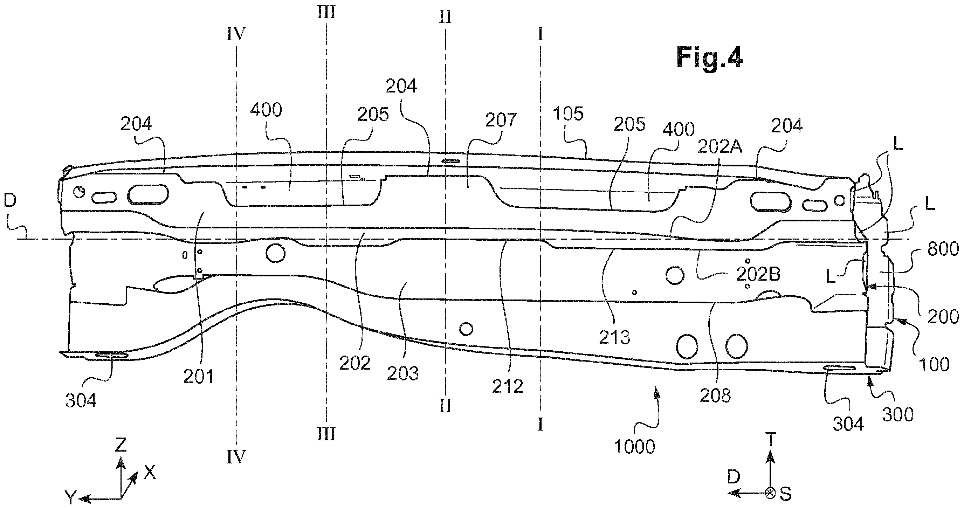

Sur les figures 3 et 4, on a représenté la traverse de baie 1000 hors du véhicule automobile 1.

Cette traverse de baie 1000 présente globalement une forme allongée selon un axe principal D qui s'étend selon la direction transversale de l'axe Y du véhicule automobile 1 lorsqu'elle est montée dans ce véhicule.

On définira également dans la suite un axe secondaire S de la traverse de baie 1000, perpendiculaire à l'axe principal D, qui s'étend selon la direction longitudinale de l'axe X du véhicule automobile 1 en position d'utilisation de la traverse de baie 1000.

On définira enfin un axe T perpendiculaire à l'axe principal D et à l'axe secondaire S. L'axe T forme avec l'axe principal D et l'axe secondaire S un repère orthogonal. Il est parallèle à l'axe Z vertical du véhicule automobile 1 lorsque la traverse de baie 1000 est en position d'utilisation dans ce véhicule automobile 1.

Les extrémités principales 800 de la traverse de baie 1000 sont ici ouvertes. Ces extrémités principales 800 ouvertes sont adaptées à être fermées par des éléments structurels du véhicule automobile 1 lorsque la traverse de baie 1000 est en position dans ledit véhicule automobile 1.

En vue de cet assemblage, les extrémités principales 800 de la traverse de baie 1000 présentent plusieurs languettes L destinées à être soudées auxdits éléments structurels du véhicule.

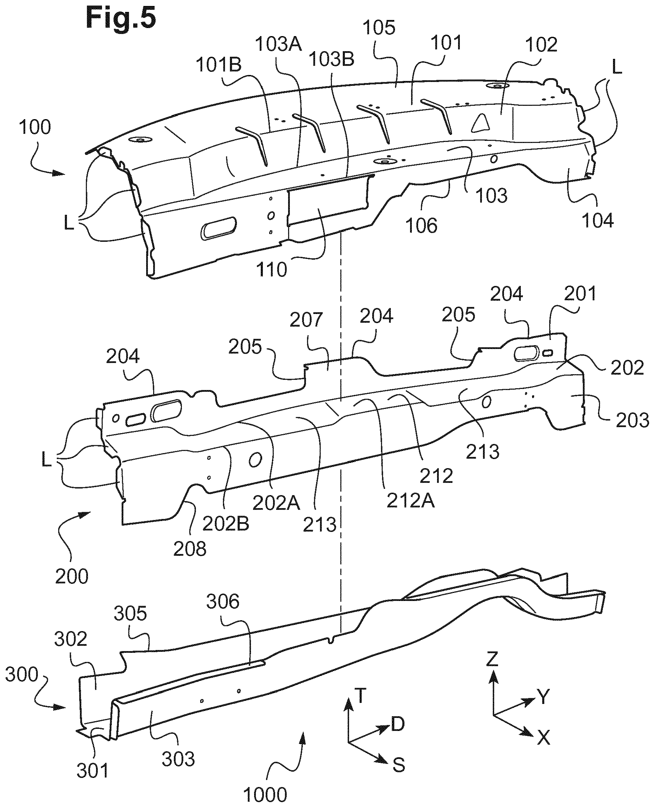

La traverse de baie 1000 comprend ici uniquement trois pièces: un élément de traverse supérieur 100, un élément de traverse inférieur 200, et un élément de traverse supplémentaire 300 (figure 5).

Chacune de ces trois pièces présente une forme allongée selon l'axe principal D.

Elles sont adaptées à être positionnées les unes en dessous des autres pour former ladite traverse de baie 1000.

Autrement dit, comme le montrent bien les figures 2 et 3, l'élément de traverse inférieur 200 est adapté à être positionné sous l'élément de traverse supérieur 100, et l'élément de traverse supplémentaire 300 est adapté à être positionné sous ces deux éléments de traverse supérieur 100 et inférieur 200.

Ces trois pièces sont chacune réalisées en un matériau adapté à se déformer plastiquement sous l'effet d'un choc. Par exemple, ces pièces sont réalisées dans un matériau métallique déformable plastiquement, ou dans un matériau composite.

Par exemple, les éléments de traverse supérieur et inférieur 100, 200 sont réalisés en tôle. L'élément de traverse supplémentaire 300 peut être réalisé en tôle ou en matériau composite.

Comme le montre la figure 5, les éléments de traverse supérieur, inférieur et supplémentaire 100, 200, 300 sont chacun formés d'une seule pièce.

Ainsi, la traverse de baie 1000 comprend un nombre réduit de pièces, ce qui participe à son allégement. En conséquence, les performances énergétiques du véhicule automobile sont améliorées.

Dans ce qui suit, nous allons plus précisément décrire les éléments de traverse supérieur, inférieur et supplémentaire 100, 200, 300.

Comme évoqué précédemment l'élément de traverse supérieur 100 présente une forme en marche d'escalier (figures 3 et 5). Ainsi, il est possible de définir pour cet élément de traverse supérieur 100 une première paroi 101, une deuxième paroi 102, une troisième paroi 103 et une quatrième paroi 104 s'étendant chacune globalement selon l'axe principal D de la traverse de baie 1000.

L'élément de traverse supérieur 100 étant formé d'une seule pièce, les première, deuxième, troisième et quatrième parois 101, 102, 103, 104 sont reliées les unes aux autres par des arêtes communes.

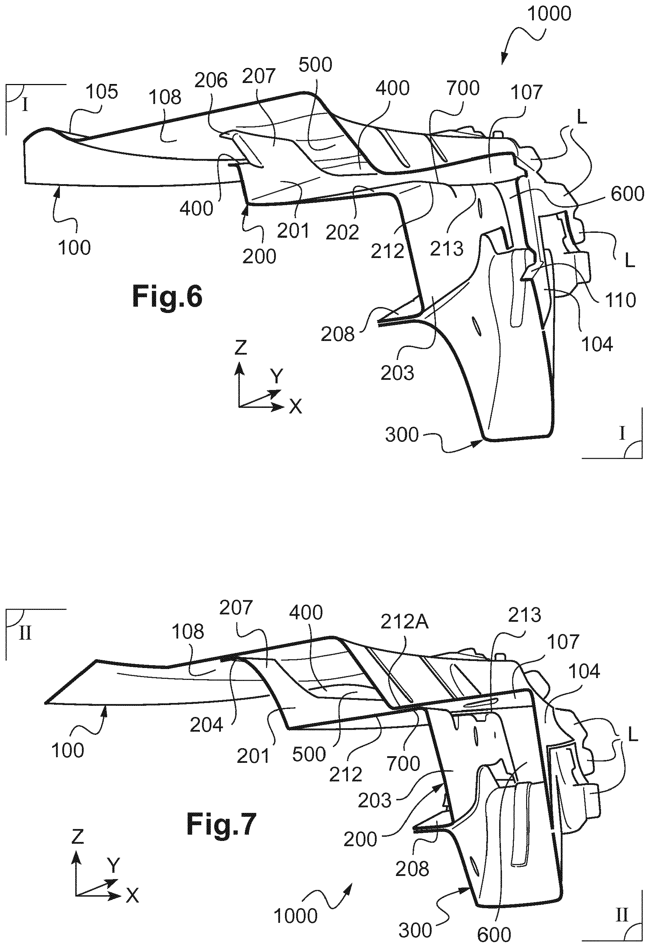

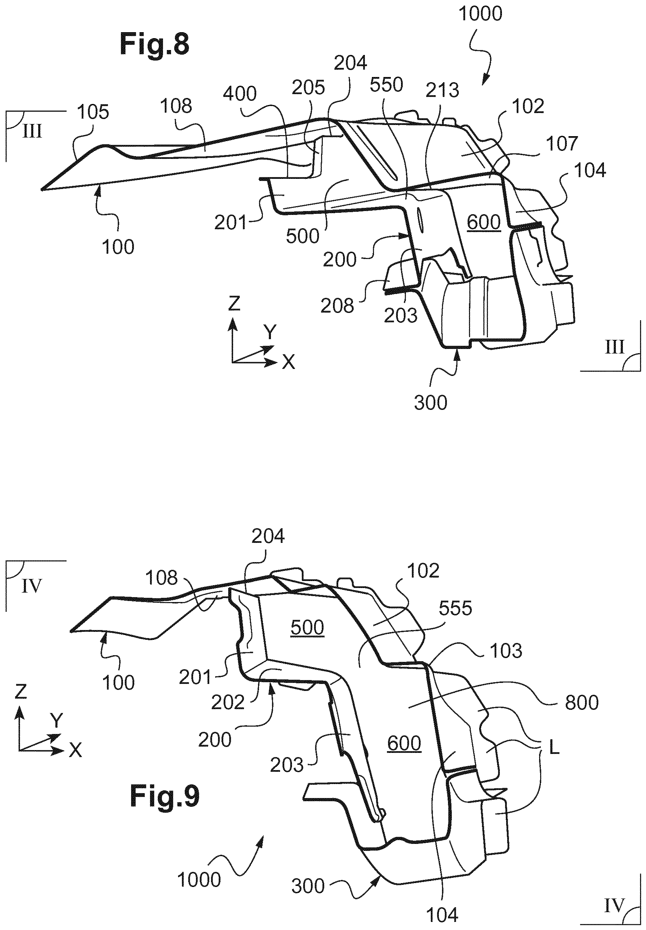

La forme en marche d'escalier de l'élément de traverse supérieur 100 est bien visible sur les figures 6 à 9 en coupe. La première paroi 101 correspond à la marche supérieure, la troisième paroi 103 à la marche inférieure, les deuxième et quatrième parois 102, 104 correspondant alors aux contremarches de l'élément de traverse supérieur 100.

Plus précisément, la première paroi 101 de l'élément de traverse supérieur 100 est globalement plane et sensiblement parallèle au plan défini par l'axe principal D et par l'axe secondaire S. Elle s'étend donc sensiblement horizontalement lorsque la traverse de baie 1000 est en position d'utilisation dans le véhicule automobile 1.

Elle présente un bord libre avant courbe convexe qui forme ladite bordure 105 destinée à accueillir le bord inférieur du pare-brise 4 lorsque la traverse de baie 1000 est en position dans le véhicule automobile 1. A l'arrière, la première paroi 101 de l'élément de traverse supérieur 100 présente un bord arrière 101B légèrement courbe, incurvé dans le même sens que le bord libre avant. Ce bord arrière 101B est situé à la jonction entre la première et la deuxième paroi 101, 102 de l'élément de traverse supérieur 100.

La troisième paroi 103 de l'élément de traverse supérieur 100 est également globalement plane. Elle est en outre parallèle à la première paroi 101 de l'élément de traverse supérieur 100. Cette troisième paroi 103 présente un bord avant 103A courbe, incurvé dans le même sens que le bord libre avant et le bord arrière 101B de la première paroi 101, et un bord arrière 103B rectiligne, globalement parallèle à l'axe principal D de la traverse de baie 1000.

Le bord avant 103A de la troisième paroi 103 est situé à la jonction entre la deuxième et la troisième paroi 102, 103 de l'élément de traverse supérieur 100.

Le bord arrière 103B est situé à la jonction entre la troisième et la quatrième paroi 103, 104 de l'élément de traverse supérieur 100.

Le bord avant 103A de la troisième paroi 103 se rapproche du bord arrière 103B de celle-ci au niveau des extrémités principales 800 dudit élément de traverse supérieur 100.

Les première et troisième parois 101, 103 de l'élément de traverse supérieur 100 sont décalées en hauteur l'une par rapport à l'autre selon l'axe T de sorte qu'elles s'étendent selon deux plans moyens parallèles non confondus. La troisième paroi 103 s'étend plus bas que la première paroi 101 en position d'utilisation.

Elles sont également décalées l'une par rapport à l'autre selon l'axe secondaire S de la traverse de baie 1000. Ainsi, dans l'élément de traverse supérieur 100, aucune portion de la troisième paroi 103 n'est située à l'aplomb d'une quelconque portion de la première paroi 101.

Comme évoqué précédemment, elles forment ainsi chacune une « marche d'escalier ».

La deuxième paroi 102 de l'élément de traverse supérieur 100 relie entre elles les première et troisième parois 101, 103 de l'élément de traverse supérieur 100. Elle est placée à l'oblique entre le bord arrière 101B de la première paroi 101 et le bord avant 103A de la troisième paroi 103 de l'élément de traverse supérieur 100.

La quatrième paroi 104 de l'élément de traverse supérieur 100 est globalement plane et s'étend à partir du bord arrière 103B rectiligne de la troisième paroi 103 de cet élément de traverse supérieur 100, vers le bas en position d'utilisation. Elle est globalement perpendiculaire à cette troisième paroi 103 et s'étend donc globalement verticalement lorsque la traverse de baie 1000 est en position d'utilisation dans le véhicule automobile 1.

Cette quatrième paroi 104 de l'élément de traverse supérieur 100 présente un bord libre inférieur 106 en contact avec l'élément de traverse supplémentaire 300.

Plus précisément, le bord libre inférieur 106 de la quatrième paroi 104 de l'élément de traverse supérieur 100 est ici soudé à l'élément de traverse supplémentaire 300.

A cet effet, le bord libre inférieur 106 de cette quatrième paroi 104 comprend des languettes L, dirigées vers l'arrière, plaquées contre une paroi de l'élément de traverse supplémentaire 300.

En outre, la quatrième paroi 104 de l'élément de traverse supérieur 100 comprend ladite ouverture arrière 110 adaptée à former la sortie d'air de la traverse de baie 1000.

Cette ouverture arrière 110 présente une forme globalement rectangulaire, de plus grande longueur parallèle à l'axe principal D. Elle est formée par un crevé dans cette quatrième paroi 104 de l'élément de traverse supérieur 100.

Comme le montrent les figures 3 et 5, l'élément de traverse inférieur 200 comporte quant à lui une première paroi 201, une deuxième 202 paroi et une troisième paroi 203 s'étendant chacune globalement selon l'axe principal D de la traverse de baie 1000.

L'élément de traverse inférieur 200 étant formé d'une seule pièce, les première, deuxième et troisième parois 201, 202, 203 de l'élément de traverse inférieur 200 sont reliées les unes aux autres par des arêtes communes.

La deuxième paroi 202 centrale de l'élément de traverse inférieur 200 s'étend globalement parallèlement aux première et troisième parois 101, 103 de l'élément de traverse supérieur 100.

Elle présente à l'arrière un bord arrière 202B rectiligne globalement parallèle à l'axe principal D de la traverse de baie 1000, et, à l'avant un bord avant 202A courbe. Ledit bord avant 202A courbe se rapproche dudit bord arrière 202B rectiligne au niveau des extrémités principales 800 de l'élément de traverse inférieur 200.

Elle présente une partie plane 213 et un plateau 212 central surélevé (figure 5).

Le plateau 212 de la deuxième paroi 202 de l'élément de traverse inférieur 200 s'élève en saillie à partir de la partie plane 213 de cette deuxième paroi 202, au-dessus d'elle selon l'axe T de la traverse de baie 1000. Ce plateau 212 est positionné globalement au centre de ladite deuxième paroi 202, c'est-à-dire à distance des extrémités principales 800 de l'élément de traverse inférieur 200.

Il s'étend sur toute la largeur de la deuxième paroi 202 de l'élément de traverse inférieur 200 située entre lesdits bords avant et arrière 202A, 202B de cette deuxième paroi 202.

Comme cela sera explicité pus loin, le plateau 212 est partiellement accolé à l'élément de traverse supérieur 100 de telle sorte qu'une face supérieure 212A du plateau 212 est en contact avec une face inférieure 107 de la troisième paroi 103 de l'élément de traverse supérieur 100.

Plus précisément, une partie de la face supérieure 212A du plateau 212 est ici soudée sur une partie de la face inférieure 107 de la troisième paroi 103 de l'élément de traverse supérieur 100.

Comme le montrent plus particulièrement les figures 6 à 8, la deuxième paroi 202 de l'élément de traverse inférieur 200 est disposée entre lesdites première et troisième parois 201, 203 de cet élément de traverse inférieur 200.

Elle est prolongée, à l'avant, par la première paroi 201 de cet élément de traverse inférieur 200 qui s'étend vers le haut à partir de son bord avant 202A courbe, et, à l'arrière, par la troisième paroi 203 de cet élément de traverse inférieur 200, qui s'étend vers le bas à partir de son bord arrière 202B rectiligne.

La troisième paroi 203 de l'élément de traverse inférieur 200 s'étend globalement perpendiculairement à ladite deuxième paroi 202 dudit élément de traverse inférieur 200 vers le bas en position d'utilisation de la traverse de baie 1000.

Le bord inférieur 208 (figure 5) de cette troisième paroi 203 de l'élément de traverse inférieur 200 est fixé sur l'élément de traverse supplémentaire 300.

En particulier, il est ici soudé à l'élément de traverse supplémentaire 300.

A cet effet, il comprend des languettes dirigées vers l'avant.

La première paroi 201 de l'élément de traverse inférieur 200 s'étend à l'oblique de la deuxième paroi 202 vers le haut en position d'utilisation de la traverse de baie 1000.

Comme le montre la figure 5, la première paroi 201 de l'élément de traverse inférieur 200 est légèrement courbe de sorte qu'elle suit la courbure du bord avant 202A de la deuxième paroi 202 de l'élément de traverse inférieur 200.

Cette première paroi 201 de l'élément de traverse inférieur 200 présente un bord avant 204 fixé à l'élément de traverse supérieur 100 (figure 4). Ce bord avant 204 de la première paroi 201 de l'élément de traverse inférieur 200 constitue ainsi le bord d'assemblage des éléments de traverse supérieur et inférieur 100, 200.

Plus précisément, le bord avant 204 de l'élément de traverse inférieur 200 est ici soudé à l'élément de traverse supérieur 100.

A cet effet, avantageusement, le bord avant 204 de l'élément de traverse inférieur 200 forme un rebord d'extrémité comprenant des languettes L dirigées vers l'avant et plaquées contre une face inférieure 108 (figure 6) de la première paroi 101 de l'élément de traverse supérieur 100.

En outre, la première paroi 201 de l'élément de traverse inférieur 200 comporte au moins une encoche 205 débouchant sur ledit bord avant 204.

Ici, il est prévu plus précisément deux encoches 205 ménagées dans la première paroi 201 de l'élément de traverse inférieur 200, qui débouchent chacune sur ledit bord avant 204.

Chaque encoche 205 présente ici une forme rectangulaire et est située dans une région centrale de la première paroi 201 de l'élément de traverse inférieur 200.

Comme le montre la figure 4, lorsque les éléments de traverse supérieur et inférieur 100, 200 sont assemblés le long du bord avant 204 de la première paroi 201 de l'élément de traverse inférieur 200, chaque encoche 205 de la première paroi 201 de l'élément de traverse inférieur 200 se trouve fermée par la face inférieure 108 plane de la première paroi 101 de l'élément de traverse supérieur 100 sur laquelle ledit bord avant 204 est soudé.

Les éléments de traverse supérieur et inférieur 100, 200 délimitent alors entre eux une ouverture avant 400 au niveau de chaque encoche 205 de la première paroi 201 de l'élément de traverse inférieur 200.

Chacune de ces ouvertures avant 400 est entièrement délimitée, sur toute sa périphérie, par les éléments de traverse supérieur et inférieur 100, 200.

Chacune de ces ouvertures avant 400 est destinée à former une entrée d'air extérieur dans la traverse de baie 1000.

Le bord avant 204 de la première paroi 201 de l'élément de traverse inférieur 200 est ici interrompu par chaque encoche 205 ménagée dans cette première paroi 201.

Ainsi, comme le montre la figure 4, les ouvertures avant 400 divisent ledit bord avant 204 formant le bord d'assemblage de l'élément de traverse inférieur 200 en au moins deux portions distinctes, c'est-à-dire séparées les unes des autres.

Ici, les deux ouvertures avant 400 divisent le bord avant 204 de la première paroi 201 de l'élément de traverse inférieur 200 en exactement trois portions distinctes.

Ainsi, ici, chaque ouverture avant 400 de la traverse de baie 1000 est située dans une région centrale de ladite traverse de baie 1000.

En d'autres termes, chaque ouverture avant 400 est située à distance des extrémités principales 800 de ladite traverse de baie 1000.

Par conséquent, lorsque la traverse de baie 1000 est en position dans le véhicule automobile 1, les régions de ladite traverse de baie 1000 situées au niveau des coupelles d'amortisseur 3 sont rigides. Cela renforce la raideur de ladite traverse de baie 1000 entre lesdites coupelles d'amortisseur 3.

Cette configuration préserve la souplesse de la traverse de baie 1000 selon la direction longitudinale de l'axe X du véhicule.

De plus, le positionnement de chaque ouverture avant 400 améliore la pénétration de l'air dans la traverse de baie 1000.

La circulation d'air dans la traverse de baie est également améliorée par ce positionnement des entrées d'air.

En outre, les ouvertures avant 400 sont localisées sur une zone réduite de la traverse de baie 1000, ce qui améliore la raideur globale de la traverse de baie 1000.

Ici, les ouvertures avant 400 sont de forme rectangulaire. Bien sûr, elles pourraient être de toute autre forme adaptée.

Ici, les deux ouvertures avant 400 sont séparées l'une de l'autre par une portion intermédiaire 207 de la première paroi 201 de l'élément de traverse inférieur 200.

Cette portion intermédiaire 207 sert de renfort adapté à supporter en partie le poids du pare-brise 4 positionné sur la traverse de baie 1000 dans le véhicule automobile 1.

En conséquence, cette portion intermédiaire 207 participe à l'amélioration de la raideur globale de la traverse de baie 1000.

L'élément de traverse supplémentaire 300 présente globalement une forme de gouttière. Il comprend un fond 301 à partir duquel s'élèvent, du même côté, une paroi latérale avant 302 et une paroi latérale arrière 303.

Avantageusement, il est adapté à être positionné sous lesdits éléments de traverse supérieur et inférieur 100, 200.

Plus précisément, le fond 301 de l'élément de traverse supplémentaire 300 est globalement plan. Il est incurvé à proximité de l'une des extrémités principales 800, de manière à permettre la fixation d'un volant sous la traverse de baie 1000 lorsqu'elle est en place dans le véhicule automobile 1.

La paroi latérale avant 302 de l'élément de traverse supplémentaire 300 s'étend globalement perpendiculairement au fond 301. Elle présente un bord supérieur 305 (figure 5) en contact avec le bord inférieur 208 de la troisième paroi 203 de l'élément de traverse inférieur 200.

En particulier, le bord supérieur 305 de la paroi latérale avant 302 de l'élément de traverse supplémentaire 300 est soudé au bord inférieur 208 de la troisième paroi 203 de l'élément de traverse inférieur 200 (figures 6 à 8).

A cet effet, le bord supérieur 305 de la paroi latérale avant 302 présente des languettes dirigées vers l'avant.

La paroi latérale arrière 303 de l'élément de traverse supplémentaire 300 présente un bord supérieur 306 en contact avec l'élément de traverse supérieur 100 (figures 3 et 6 à 8).

En particulier, le bord supérieur 306 de la paroi latérale arrière 303 de l'élément de traverse supplémentaire 300 est soudé au bord libre inférieur 106 de la quatrième paroi 104 de l'élément de traverse supérieur 100.

A cet effet, il est terminé par des languettes dirigées vers l'arrière (figure 5).

En outre, avantageusement, le fond 301 de l'élément de traverse supplémentaire 300 comprend au moins un trou 304 de sorte que cet élément de traverse supplémentaire 300 est adapté à évacuer l'eau pénétrant éventuellement dans la traverse de baie 1000.

En ce qui concerne l'assemblage des éléments de traverse supérieur, inférieur et supplémentaire 100, 200, 300, comme décrit précédemment, lesdits éléments de traverse supérieur et inférieur 100, 200 sont assemblés de manière à relier, d'une part, le bord avant 204 de la première paroi 201 de l'élément de traverse inférieur 200 et la face inférieure 108 de la première paroi 101 de l'élément de traverse supérieur 100, et, d'autre part, la deuxième paroi 202 de l'élément de traverse inférieur 200 et la troisième paroi 103 de l'élément de traverse supplémentaire 100.

Cet agencement est tel qu'un premier corps creux 500 est formé entre ces deux éléments de traverse supérieur et inférieur 100, 200. Chaque ouverture avant 400 de la traverse de baie 1000 débouche dans ce premier corps creux 500 qui constitue alors un premier conduit de circulation d'air.

Le premier corps creux 500, et donc le premier conduit de circulation d'air ainsi formé s'étendent globalement selon l'axe principal D.

Plus précisément, le premier corps creux 500 est délimité par la première et la deuxième parois 101, 102 de l'élément de traverse supérieur 100, et par la première et la deuxième parois 201, 202 de l'élément de traverse inférieur 200.

Ce premier corps creux 500 est fermé radialement, en ce sens que les parois des éléments de traverse supérieur et inférieur délimitent ce premier corps creux 500 tout autour de la direction de l'axe principal D de la traverse de baie 1000.

De façon remarquable, lesdits éléments de traverse supérieur 100 et inférieur 200 sont également assemblés entre eux le long d'une cloison 700 d'assemblage s'étendant selon l'axe principal D, dans une région centrale de ladite traverse de baie 1000, de manière à former un deuxième corps creux 600 séparé au moins partiellement dudit premier corps creux 500 par ladite cloison 700 d'assemblage.

La cloison 700 rigidifie la traverse de baie 1000 selon l'axe principal D. En conséquence, la raideur entre les coupelles d'amortisseur 3 est améliorée.

De plus, avantageusement, la cloison 700 est située dans une zone intermédiaire entre lesdits premier et deuxième corps creux 500, 600, à savoir à distance de la bordure 105 de l'élément de traverse supérieur 100 accueillant le pare-brise 4.

Ainsi, ladite cloison 700 ne détériore pas la souplesse de la traverse de baie 1000 dans la direction longitudinale de l'axe X du véhicule automobile 1. Autrement dit, la cloison 700 n'empêche pas la traverse de baie 1000 de se déformer dans les directions longitudinale et verticale des axes X, Z du véhicule automobile lorsque celui-ci subit un choc avec un piéton.

Le deuxième corps creux 600 est ici ouvert radialement et constitue une partie supérieure d'un deuxième conduit de circulation d'air fermé dans sa partie inférieure par l'élément de traverse supplémentaire 300.

Le deuxième corps creux 600, et donc le deuxième conduit de circulation d'air ainsi formé s'étendent également globalement selon l'axe principal D.

Plus précisément, le deuxième corps creux 600 est formé par la troisième et la quatrième parois 103, 104 de l'élément de traverse supérieur 100 et par la troisième paroi 203 de l'élément de traverse inférieur 200.

Le deuxième corps creux 600 comprend ladite ouverture arrière 110 destinée à former la sortie d'air depuis ledit deuxième corps creux 600 vers l'habitacle 7 du véhicule automobile 1.

Le deuxième conduit de circulation d'air est séparé dudit premier conduit de circulation d'air par la cloison 700 disposée dans une région centrale de la traverse de baie 1000.

De façon avantageuse, chaque ouverture avant 400 ainsi que la cloison 700 sont situées dans une région centrale de ladite traverse de baie.

Ainsi, la cloison 700 est adaptée à détourner l'air entrant dans le premier conduit de circulation d'air vers les extrémités principales 800 de la traverse de baie 1000. Cet agencement réduit sensiblement les nuisances sonores liées à la circulation de l'air par rapport à une configuration où l'air circulerait directement depuis les ouvertures situées à l'avant de la traverse de baie jusqu'à la sortie d'air sans être dévié.

Comme le montre la figure 7, la cloison 700 séparant les premier et deuxième corps creux 500, 600 est formée par la réunion d'une portion dudit élément de traverse supérieur 100 accolée à une portion dudit élément de traverse inférieur 200.

Plus précisément, la cloison 700 est formée par l'assemblage d'une partie de paroi dudit élément de traverse supérieur et d'une partie de paroi dudit élément de traverse inférieur.

Elle est formée ici par une partie de la deuxième paroi 202 de l'élément de traverse inférieur 200 et une partie de la troisième paroi 103 de l'élément de traverse supérieur 100.

Ici, il s'agit du plateau 212 de la deuxième paroi 202 de l'élément de traverse inférieur 200 qui est plaqué contre la face inférieure 107 de la troisième paroi 103 de l'élément de traverse supérieur 100.

De façon avantageuse, lesdites parties de paroi des éléments de traverse supérieur et inférieur 100, 200 sont soudées l'une sur l'autre.

En particulier, ici, la face supérieure 212A dudit plateau 212 est soudée à la face inférieure 107 de la troisième paroi 103 de l'élément de traverse supérieur 100.

En variante, le plateau pourrait être riveté à la troisième paroi de l'élément de traverse supérieur.

La cloison 700 s'étend ici horizontalement, selon l'axe principal D de la traverse de baie 1000, en position d'utilisation dans le véhicule automobile 1.

En variante, on pourrait imaginer que la cloison soit formée par une partie inférieure de la deuxième paroi de l'élément de traverse supérieur et par une partie supérieure de la troisième paroi de l'élément de traverse inférieur. Elle s'étendrait alors principalement verticalement en position d'utilisation dans le véhicule automobile 1.

Ici, la cloison 700 est disposée en regard de la portion intermédiaire 207 de la première paroi 201 de l'élément de traverse inférieur 200, située entre les ouvertures avant 400.

En variante, on pourrait disposer la cloison en regard d'une des ouvertures situées à l'avant.

On pourrait également envisager que la traverse de baie ne comporte qu'une seule ouverture à l'avant et que la cloison s'étende en regard de cette ouverture unique.

En variante encore, on pourrait envisager que la cloison s'étende sur une distance plus grande selon l'axe principal de la traverse de baie. On pourrait alors disposer la cloison à la fois en regard de ladite portion intermédiaire de la première paroi de l'élément de traverse inférieur, et en regard d'au moins une des deux ouvertures avant, voire des deux ouvertures avant.

De manière générale, cette cloison 700 est disposée dans une région du premier corps creux 500 opposée auxdites ouvertures avant 400.

Il faut noter que la cloison 700 sépare en partie seulement les premier et deuxième corps creux 500, 600 de la traverse de baie 1000, de sorte que ceux-ci sont en communication l'un avec l'autre.

L'air entrant dans la traverse de baie 1000 par les ouvertures avant 400 peut donc circuler depuis le premier conduit de circulation d'air formé par le premier corps creux 500 vers le deuxième conduit de circulation d'air formé par le deuxième corps creux 600, en direction de l'ouverture arrière 110 formant la sortie d'air débouchant dans l'habitacle 7 du véhicule automobile 1.

Plus précisément, lesdits premier et deuxième corps creux 500, 600 sont en communication l'un avec l'autre au niveau des extrémités principales 800 de la traverse de baie 1000.

Ici, comme le montrent les différentes coupes transversales de la traverse de baie 1000 (figures 6 à 9), la communication entre les premier et deuxième corps creux 500, 600 se fait de part et d'autre de la cloison 700.

Ici, ladite cloison 700 d'assemblage est formée par l'assemblage du plateau 212 de la deuxième paroi 202 de l'élément de traverse inférieur 200 contre la face inférieure 107 de la troisième paroi 103 de l'élément de traverse supérieur 100.

Or, le bord avant 103A de la troisième paroi 103 de l'élément de traverse supérieur 100 qui constitue le bord avant de la face inférieure 107 est courbe, tandis que le bord arrière du plateau 212 de la deuxième paroi 202 de l'élément de traverse inférieur 200 correspond au bord arrière 202B de cette deuxième paroi 202 qui est rectiligne.

Le plateau 212 de la deuxième paroi 202 de l'élément de traverse inférieur 200 et la face inférieure 107 de la troisième paroi 103 de l'élément de traverse supérieur 100 sont plaqués l'un contre l'autre dans une zone centrale de ces éléments de traverse de telle sorte que le bord courbe 103A de la troisième paroi 103 de l'élément de traverse supérieur 100 s'écarte du bord rectiligne 202B de la deuxième paroi 202 de l'élément de traverse inférieur 200 de part et d'autre de cette zone centrale.

Ainsi, un passage 555 permettant la communication entre les premier et deuxième corps creux 500, 600 est ménagé entre le bord courbe 103A de la troisième paroi 103 de l'élément de traverse supérieur 100 et le bord rectiligne 202B de la deuxième paroi 202 de l'élément de traverse inférieur 200 (figures 6 à 9).

En outre, ici, la troisième paroi 103 plane de l'élément de traverse supérieur 100 étant plaquée contre le plateau 212 de la deuxième paroi 202 de l'élément de traverse inférieur 200, la partie plane 213 de cette deuxième paroi 202 de l'élément de traverse inférieur 200, située en retrait par rapport audit plateau 212, délimite, avec la face inférieure 107 de ladite troisième paroi 103 de l'élément de traverse supérieur 100, un interstice 550 s'étendant de part et d'autre de la cloison 700.

Cet interstice 550 s'agrandit selon l'axe secondaire S de la traverse de baie 1000, au fur et à mesure que l'on s'éloigne de la cloison 700 en direction des extrémités principales 800 de la traverse de baie 1000. En effet, comme expliqué ci-dessus, le bord courbe avant 103A de la troisième partie 103 de l'élément de traverse supérieur 100 s'écarte du bord rectiligne arrière 202B de la deuxième partie 202 de l'élément de traverse inférieur 200 au niveau des extrémités principales 800 de la traverse de baie 1000.

L'interstice 550 forme alors au niveau de chaque extrémité principale 800 de cette traverse de baie 1000 le passage 555 plus large entre les premier et deuxième corps creux 500, 600.

La cloison 700 située dans la région centrale de la traverse de baie 1000, forme un obstacle adapté à gêner le passage de l'air depuis le premier conduit de circulation d'air formé par le premier corps creux 500 vers le deuxième conduit de circulation d'air formé par le deuxième corps creux 600, tout en étant adapté à diriger cet air depuis la région centrale du premier conduit de circulation d'air formé par le premier corps creux 500 vers les extrémités principales 800 de la traverse de baie 1000.

Plus précisément, en pratique, lorsque ledit véhicule automobile 1 est en mouvement, de l'air, principalement en provenance de l'extérieur dudit véhicule, pénètre dans le premier corps creux 500 de la traverse de baie 1000 via les ouvertures avant 400.

L'air entrant bute sur la deuxième paroi 102 de l'élément de traverse supérieur 100, au droit de la cloison 700. La forme incurvée de cette deuxième paroi 102 de l'élément de traverse supérieur 100 guide l'air vers les passages 555, de chaque côté de la cloison 700.

La majorité de cet air circule ainsi vers les extrémités principales 800 de la traverse de baie 1000, et passe dans le deuxième conduit de circulation d'air formé par le deuxième corps creux 600 à travers les passages 555. Une faible portion de cet air est également susceptible de traverser l'interstice 550 existant entre les premier et deuxième corps creux 500, 600.

L'air circule ensuite dans le deuxième corps creux 600, depuis les extrémités principales 800 de la traverse de baie 1000 vers la sortie d'air formée par l'ouverture arrière 110.

Ladite sortie d'air formée par l'ouverture arrière 110 débouche dans un système de ventilation, ou de climatisation, de l'habitacle 7 du véhicule automobile 1.

Avantageusement, cet agencement réduit sensiblement les vibrations et les nuisances sonores dues à la circulation d'air dans la traverse de baie 1000. La circulation de l'air est donc améliorée.

Suivant les conditions climatiques, il se peut que de l'eau pénètre également dans ladite traverse de baie 1000 via les ouvertures avant 400. Dans ce cas, l'eau suit un trajet similaire à celui de l'air depuis le premier corps creux 500 jusqu'au deuxième corps creux 600.

Ensuite, l'eau tombe dans la gouttière formée par l'élément de traverse supplémentaire 300, et est éliminée de la traverse de baie 1000 via les trous 304.

Ainsi, la traverse de baie 1000 est adaptée à séparer l'air et l'eau pénétrant dans ladite traverse de baie 1000. Par conséquent, l'efficacité de la climatisation de l'habitacle est améliorée. En outre, les pannes du bloc climatisation sont réduites.

En conséquence, la nouvelle traverse de baie 1000 améliore les performances du système de ventilation, notamment lorsqu'il s'agit d'un système de climatisation pour lequel il est préférable que l'air entrant soit aussi sec que possible.

## Revendications

1. Traverse de baie (1000) d'un véhicule automobile (1) adaptée à être positionnée entre un bord inférieur d'un pare-brise (4) dudit véhicule automobile (1) et un tablier (5) de ce véhicule automobile (1), présentant une forme allongée selon un axe principal (D), et comprenant un élément de traverse supérieur (100) et un élément de traverse inférieur (200) assemblés pour former entre eux un premier corps creux (500), lesdits éléments de traverse supérieur et inférieur (100, 200) étant également assemblés entre eux le long d'une cloison (700) d'assemblage s'étendant selon l'axe principal (D), dans une région centrale de ladite traverse de baie (1000) pour former un deuxième corps creux (600) séparé au moins partiellement dudit premier corps creux (500) par ladite cloison (700) d'assemblage, **caractérisé en ce qu'**il est prévu au moins une ouverture avant (400) destinée à former une entrée d'air extérieur dans ladite traverse de baie (1000), qui débouche dans ledit premier corps creux (500).

2. Traverse de baie (1000) selon la revendication 1, dans laquelle ladite cloison (700) d'assemblage est formée par l'assemblage d'une partie de paroi dudit élément de traverse supérieur (100) et d'une partie de paroi dudit élément de traverse inférieur (200).

3. Traverse de baie selon l'une des revendications 1 et 2, dans laquelle lesdits premier et deuxième corps creux (500, 600) sont en communication l'un avec l'autre, au niveau des extrémités principales de la traverse de baie (1000).

4. Traverse de baie (1000) selon la revendication 3, dans laquelle, ladite cloison (700) d'assemblage étant formée par l'assemblage d'une première et d'une deuxième parties de paroi appartenant aux éléments de traverse supérieur et inférieur (100, 200), la première partie de paroi présentant un bord courbe (103A) et la deuxième partie de paroi présentant un bord rectiligne (202B), ces première et deuxième parties de parois sont plaquées l'une contre l'autre dans une zone centrale de telle sorte que le bord courbe (103A) de la première partie de paroi s'écarte du bord rectiligne (202B) de la deuxième partie de paroi de part et d'autre de cette zone centrale.

5. Traverse de baie selon l'une des revendications 1 à 4, dans laquelle, chaque ouverture avant (400) est située à distance des extrémités principales (800) de ladite traverse de baie (1000).

6. Traverse de baie (1000) selon l'une des revendications 1 à 5, dans laquelle il est prévu au moins une ouverture arrière (110) destinée à former une sortie d'air depuis ledit deuxième corps creux (600) vers un habitacle (7) du véhicule automobile (1).

7. Traverse de baie (1000) selon l'une des revendications 1 à 6, dans laquelle les éléments de traverse supérieur et inférieur (100, 200) sont chacun formés d'une seule pièce.

8. Traverse de baie (1000) selon l'une des revendications 1 à 7, dans laquelle un élément de traverse supplémentaire (300) est disposé sous les éléments de traverse supérieur et inférieur (100, 200) de manière à fermer le deuxième corps creux (600).

9. Véhicule automobile (1) qui s'étend d'avant en arrière selon une direction longitudinale (X), et qui comprend un pare-brise (4) et un tablier (5),
**caractérisé en ce qu'**il comprend en outre une traverse de baie (1000) selon l'une des revendications 1 à 8, positionnée selon une direction transversale (Y) dudit véhicule automobile (1), entre ledit tablier (5) et un bord inférieur dudit pare-brise (4).

## Patentansprüche

1. Scheibenquerträger (1000) eines Kraftfahrzeugs (1), welcher dafür ausgelegt ist, zwischen einem unteren Rand einer Windschutzscheibe (4) des Kraftfahrzeugs (1) und einer Spritzwand (5) dieses Kraftfahrzeugs (1) positioniert zu werden, eine entlang einer Hauptachse (D) lang gestreckte Form aufweist und ein oberes Querträgerelement (100) und ein unteres Querträgerelement (200) umfasst, die so zusammengebaut sind, dass sie zwischen sich einen ersten Hohlkörper (500) bilden, wobei das obere und das untere Querträgerelement (100, 200) außerdem entlang einer Montagetrennwand (700) miteinander verbunden sind, die sich in einem mittleren Bereich des Scheibenquerträgers (1000) entlang der Hauptachse (D) erstreckt, um einen zweiten Hohlkörper (600) zu bilden, der durch die Montagetrennwand (700) wenigstens teilweise von dem ersten Hohlkörper (500) getrennt ist, **dadurch gekennzeichnet, dass** wenigstens eine vordere Öffnung (400) vorgesehen ist, die dazu bestimmt ist, einen Außenlufteinlass in dem Scheibenquerträger (1000) zu bilden, und die in den ersten Hohlkörper (500) mündet.

2. Scheibenquerträger (1000) nach Anspruch 1, wobei die Montagetrennwand (700) durch den Zusammenbau eines Wandteils des oberen Querträgerelements (100) und eines Wandteils des unteren Querträgerelements (200) gebildet wird.

3. Scheibenquerträger nach einem der Ansprüche 1 und 2, wobei der erste und der zweite Hohlkörper (500, 600) an den Hauptenden des Scheibenquerträgers (1000) miteinander in Verbindung stehen.

4. Scheibenquerträger (1000) nach Anspruch 3, wobei, wenn die Montagetrennwand (700) durch den Zusammenbau eines ersten und eines zweiten Wandteils gebildet wird, die zu dem oberen und dem unteren Querträgerelement (100, 200) gehören, der erste Wandteil einen gekrümmten Rand (103A) aufweist und der zweite Wandteil einen geradlinigen Rand (202B) aufweist, dieser erste und dieser zweite Wandteil in einem mittleren Bereich gegeneinandergedrückt sind, derart, dass der gekrümmte Rand (103A) des ersten Wandteils sich beiderseits dieses mittleren Bereichs von dem geradlinigen Rand (202B) des zweiten Wandteils entfernt.

5. Scheibenquerträger nach einem der Ansprüche 1 bis 4, wobei sich jede vordere Öffnung (400) in einem Abstand von den Hauptenden (800) des Scheibenquerträgers (1000) befindet.

6. Scheibenquerträger (1000) nach einem der Ansprüche 1 bis 5, wobei wenigstens eine hintere Öffnung (110) vorgesehen ist, die dazu bestimmt ist, einen Luftauslass aus dem zweiten Hohlkörper (600) zum Innenraum (7) des Kraftfahrzeugs (1) hin zu bilden.

7. Scheibenquerträger (1000) nach einem der Ansprüche 1 bis 6, wobei das obere und das untere Querträgerelement (100, 200) jeweils aus einem Stück gebildet sind.

8. Scheibenquerträger (1000) nach einem der Ansprüche 1 bis 7, wobei ein zusätzliches Querträgerelement (300) unter dem oberen und dem unteren Querträgerelement (100, 200) angeordnet ist, um so den zweiten Hohlkörper (600) zu verschließen.

9. Kraftfahrzeug (1), welches sich von vorn nach hinten entlang einer Längsrichtung (X) erstreckt und welches eine Windschutzscheibe (4) und eine Spritzwand (5) umfasst,
**dadurch gekennzeichnet, dass** es außerdem einen Scheibenquerträger (1000) nach einem der Ansprüche 1 bis 8 umfasst, der entlang einer Querrichtung (Y) des Kraftfahrzeugs (1) zwischen der Spritzwand (5) und einem unteren Rand der Windschutzscheibe (4) positioniert ist.

## Claims

1. Bay cross member (1000) of a motor vehicle (1) suitable for being positioned between a lower edge of a windscreen (4) of said motor vehicle (1) and an fire wall (5) of this motor vehicle (1), having an elongated shape along a main axis (D), and comprising an upper cross member element (100) and a lower cross member element (200) which are assembled to form, between them, a first hollow body (500), said upper and lower cross member elements (100, 200) also being assembled with one another along an assembly partition (700) extending along the main axis (D), in a central region of said bay cross member (1000) in order to form a second hollow body (600) separated at least partially from said first hollow body (500) by said assembly partition (700), **characterized in that** at least one front opening (400) is provided which is intended to form an outer-air inlet in said bay cross member (1000), and which leads into said first hollow body (500) .

2. Bay cross member (1000) according to Claim 1, wherein said assembly partition (700) is formed by assembling a wall part of said upper cross member element (100) and a wall part of said lower cross member element (200).

3. Bay cross member according to one of Claims 1 or 2, wherein said first and second hollow bodies (500, 600) are in communication with one another, at the main ends of the bay cross member (1000).

4. Bay cross member (1000) according to Claim 3, wherein, since said assembly partition (700) is formed by assembling a first and a second wall part belonging to the upper and lower cross member elements (100, 200), the first wall part having a curved edge (103A) and the second wall part having a straight edge (202B), these first and second wall parts are pressed against one another in a central area such that the curved edge (103A) of the first wall part moves away from the straight edge (202B) of the second wall part on either side of this central area.

5. Bay cross member according to one of Claims 1 to 4, wherein each front opening (400) is located at a distance from the main ends (800) of said bay cross member (1000).

6. Bay cross member (1000) according to one of Claims 1 to 5, wherein at least one rear opening (110) is provided that is intended to form an air outlet from said second hollow body (600) towards a passenger compartment (7) of the motor vehicle (1).

7. Bay cross member (1000) according to one of Claims 1 to 6, wherein the upper and lower cross member elements (100, 200) are each formed in a single piece.

8. Bay cross member (1000) according to one of Claims 1 to 7, wherein an additional cross member element (300) is placed under the upper and lower cross member elements (100, 200) such as to close the second hollow body (600).

9. Motor vehicle (1) extending from front to rear in a longitudinal direction (X), and which comprises a windscreen (4) and a fire wall (5),
**characterized in that** it further comprises a bay cross member (1000) according to one of Claims 1 to 8, positioned in a transverse direction (Y) of said motor vehicle (1), between said fire wall (5) and a lower edge of said windscreen (4).
